# FASCICULE DE BREVET EUROPEEN

(11) **EP 1 913 820 B1**
(45) Date de publication et mention de la délivrance du brevet: **17.06.2009**
(21) Numéro de dépôt: 07118134.1
(22) Date de dépôt: 09.10.2007
(51) Int. Cl.: A23L 1/00, A23L 1/236, A23G 3/38

(54) **Composition édulcorante granulée**
Süßstoffgranulatzusammensetzung
Granulated sweetening composition

(30) Priorité: 17.10.2006 FR 0609085
(43) Date de publication de la demande: 23.04.2008
(73) Titulaire: Roquette Frères, 62136 Lestrem (FR)
(72) Inventeur: Fouache, Catherine, (décédée) (FR); Muller, Elsa, 62920 Gonnehem (FR); Ribadeau-Dumas, Guillaume, 59237 Verlinghem (FR); Toursel, Béatrice, 62920 Gonnehem (FR); Zhou, Liuming, Macomb, IL 61455 (US)
(74) Mandataire: Cabinet Plasseraud

(56) Documents cités:
- EP-A- 1 674 475
- EP-A1- 0 954 982
- FR-A1- 2 236 005
- FR-A1- 2 825 001
- JP-A- 6 253 773
- US-B1- 6 780 990
- US-B2- 6 875 460

## Description

La présente invention concerne une nouvelle composition édulcorante sous forme de poudre destinée tout particulièrement à la fabrication de sucres cuits nus sans sucre, c'est à dire commercialisés sans emballage individuel.

Elle concerne également un procédé de préparation d'une telle composition et son utilisation pour la fabrication de sucres cuits.

Les sucres cuits, appelés aussi communément bonbons durs, sont des produits de confiserie solides et essentiellement amorphes. Ils sont obtenus par déshydratation poussée de sirops de carbohydrates. Généralement, on procède à la cuisson de mélanges de carbohydrates qui contiennent de l'eau en une quantité juste suffisante pour dissoudre l'ensemble des cristaux. On cuit ensuite ces mélanges pour évaporer l'essentiel de l'eau, puis on termine la cuisson sous vide pour abaisser davantage encore la teneur en eau du bonbon, et l'amener à une valeur généralement inférieure à 3%. On refroidit ensuite la masse plastique obtenue, on y ajoute différents ingrédients tels que des arômes, colorants, acides, extraits de plantes, vitamines, principes actifs pharmaceutiques. On procède ensuite à la mise en forme de la masse cuite, par coulage ou formage, et l'on obtient après retour à température ambiante, des sucres cuits présentant une texture et une apparence semblable à celle du verre.

On demande aux sucres cuits d'être stables dans le temps, c'est à dire d'évoluer le moins possible depuis le moment où ils sont fabriqués jusqu'au moment où ils sont consommés, et cela pour rester des produits attrayants et agréables en bouche.

Or les sucres cuits ne sont pas des produits stables du point de vue thermodynamique. L'importance de leur évolution dépend essentiellement de leurs compositions après fabrication mais aussi des conditions dans lesquelles ils sont conservés.

En premier lieu, les sucres cuits peuvent devenir collants lors du stockage. Lorsqu'ils sont papillotés, il devient difficile, voire impossible d'éliminer leur papier d'emballage avant de les consommer. Ils peuvent aussi prendre en masse sans rester individualisés, ce qui est encore plus gênant.

On explique cette évolution problématique vers un état collant et sirupeux, par des phénomènes de surface et/ou en profondeur.

Les phénomènes de surface trouvent leur origine dans le caractère hygroscopique des sucres cuits. On sait en effet que les sucres cuits, produits presque anhydres, présentent des humidités relatives d'équilibre toujours très basses, nettement inférieures aux humidités relatives ambiantes habituelles de stockage. Ceci explique qu'une reprise en eau a forcément lieu à la surface des bonbons dès qu'ils sont et restent exposés à l'air. Lorsque cette reprise en eau est importante, elle tend à liquéfier la surface des bonbons et à leur communiquer les caractéristiques d'un sirop, c'est à dire en particulier à leur communiquer un caractère collant. Cette évolution apparaît d'autant plus rapidement que les sucres cuits présentent une basse teneur en eau.

Les phénomènes en profondeur, qui ne concernent donc pas uniquement la surface mais la totalité de la masse des bonbons, ont une origine thermique. Plus précisément, il convient, pour que ces phénomènes aient lieu, que la température de stockage dépasse quelque peu la température de transition vitreuse du sucre cuit. La température de transition vitreuse est la température à laquelle, par chauffage, un sucre cuit vitreux et solide devient un liquide sirupeux amorphe. On comprend très bien qu'un sucre cuit puisse être sujet à une déformation, voire à un écoulement complet, lorsque sa température de conservation est élevée et sa température de transition vitreuse plutôt basse. Le produit initialement sec au toucher devient collant. Il convient de noter que plus le sucre cuit est riche en eau, plus il est sujet à un risque d'évolution de cette nature durant sa conservation.

En conclusion, pour éviter que les sucres cuits ne deviennent des produits collants au stockage, il est toujours apparu nécessaire que leur teneur en eau ne soit ni trop faible ni trop forte.

En second lieu, les sucres cuits peuvent avoir tendance lors du stockage à cristalliser de manière incontrôlée et de ce fait, à perdre leur aspect vitreux très attrayant, en ressemblant alors davantage à des sucres d'orge qui sont très différents des produits de confiserie auxquels on s'intéresse dans le cadre de la présente invention.

Cette cristallisation peut avoir lieu en surface ou au coeur du bonbon.

La cristallisation en surface nécessite une reprise en eau significative et correspond à un stade d'évolution complémentaire par rapport à celui décrit plus haut. Elle nécessite également une concentration suffisante en molécules cristallisables dans la couche périphérique liquéfiée. Lorsque ces deux conditions sont réunies, on observe alors une cristallisation qui s'opère depuis la surface du bonbon vers son centre. Ce phénomène, lorsqu'il est incontrôlé, est connu sous le nom de tournage. Il rend les bonbons totalement opaques et blancs, ce qui n'est pas recherché.

La cristallisation peut avoir lieu aussi très directement au coeur du sucre cuit si celui-ci est très riche en eau ou si la température de stockage est trop élevée. Dans ces conditions, le sucre cuit présente alors une mollesse excessive et ne peut plus être considéré comme un véritable solide. Il s'agit alors plutôt d'un liquide sursaturé en molécules cristallisables dont l'évolution vers un état cristallin est inéluctable et quasiment spontanée. Les spécialistes dénomment ce type de cristallisation sous le terme de grainage.

En définitive, pour que les sucres cuits ne soient pas instables et ne deviennent pas au cours du temps des produits collants, tournés ou grainés, il a toujours semblé impératif d'ajuster d'une part leur teneur en eau, et d'autre part, leur teneur en molécules cristallisables.

A l'issue de leur fabrication, les sucres cuits obtenus sont soit papillotés individuellement avant leur mise en sachets, soit mis directement en sachets ou en boites cartonnées, sans emballage individuel. Dans ce dernier cas, les sucres cuits sont dits « nus ».

A l'heure actuelle, pour pouvoir réaliser des sucres cuits suffisamment stables à l'humidité et à la chaleur, on utilise le plus couramment des sirops d'hydrolysats d'amidon hydrogénés et/ou de l'isomalt. L'association de ces deux produits a, certes, permis de limiter la reprise en eau des bonbons obtenus, notamment du fait du caractère faiblement hygroscopique de l'isomalt, mais a entraîné une augmentation importante du prix de revient du bonbon et une perte très sensible en pouvoir sucrant. L'isomalt est en effet un produit onéreux, et de ce fait convient mal comme agent de charge de produits fabriqués en grande quantité. Par ailleurs, l'isomalt contient environ 5% d'eau de cristallisation et nécessite donc des températures de cuisson élevées pour permettre une déshydratation suffisante du sirop pour l'obtention d'un sucre cuit de qualité.

Dans le document US-A-5.236.719, une dextrine dont les composés de bas poids moléculaire ont été éliminés par chromatographie est utilisée en association avec du xylitol, du sorbitol ou du maltitol dans la fabrication de sucres cuits. Cependant, les polyols associés à la dextrine étant très solubles, ils ne cristallisent pas à la surface du sucre cuit. Au contraire, dès que les sucres cuits à base de cette composition sont au contact avec l'atmosphère, ils ont tendance à reprendre de l'eau et à devenir collants. Par conséquent les sucres cuits ainsi préparés doivent impérativement être emballés individuellement pour limiter cette reprise en eau.

Une alternative a été trouvée par la Demanderesse, qui décrit dans le document EP 0954982 B1 des compositions édulcorantes visant à substituer l'isomalt, qui comprennent un ou plusieurs polyols peu solubles dans l'eau (les polyols solubles tels que le maltitol étant exclus), et un agent cristallisant comprenant des oligosaccharides ou polysaccharides de poids moléculaire compris entre 1000 et 8000 daltons.

Si ces compositions donnent satisfaction dans la fabrication de sucres cuits nus et stables, elles engendrent un nouveau problème technique en particulier lorsque le polyol est le mannitol, qui est l'apparition de craquelures dans le sucre cuit (apparition de fissures en surface).

Sans vouloir être liée par une théorie, la Demanderesse pense que ce problème technique est dû à l'instabilité de la forme cristalline du mannitol dans le sucre cuit. A l'issue de recherches approfondies, la Demanderesse a trouvé que pour obtenir un sucre cuit nu et stable, il convenait de mettre en oeuvre, pour sa fabrication, une composition ternaire en poudre, comprenant un polyol peu soluble comme le mannitol, du maltitol et une dextrine hydrogénée dans des proportions particulières et sélectionnées. De plus, cette composition permet de mettre en oeuvre des températures de cuisson accessibles en industrie pour la préparation de sucres cuits.

L'invention a donc pour objet une composition édulcorante granulée caractérisée par le fait qu'elle comprend :
- un polyol peu soluble ayant une solubilité dans l'eau inférieure à 60 g/100 g de solution à 20°C,
- une dextrine hydrogénée de masse moléculaire en poids comprise entre 3000 et 5000 daltons,
- du maltitol.

De préférence, le polyol peu soluble dans l'eau est le mannitol.

La composition selon l'invention comprend avantageusement en poids sur sec de 27 à 35% de mannitol, de 55 à 70% de dextrine hydrogénée et de 0,5 à 10% de maltitol.

Selon une variante préférée de la présente invention, la composition est caractérisée en ce qu'elle comprend de 30 à 33% de mannitol, de 59 à 64% de dextrine hydrogénée et 6 à 7,5% de maltitol, ces pourcentages étant exprimés sur matière sèche.

Les meilleurs résultats ont été obtenus avec une composition comprenant en poids sur sec 30% de mannitol, 6% de maltitol, et 64% de dextrine hydrogénée.

Au-delà de 7,5% de maltitol, aux teneurs en mannitol considérées, on observe dans certains cas une déformation des sucres cuits, qui peut être corrigée en augmentant le poids moléculaire des dextrines utilisées.

Comme il le sera démontré dans les exemples qui suivent, d'autres polyols et notamment le sorbitol ont été testés dans la préparation de sucres cuits comparativement au maltitol, pour réduire ou empêcher la formation de craquelures en surface, et ne donnent pas de résultats satisfaisants contrairement au maltitol.

En ce qui concerne la masse moléculaire en poids de la dextrine hydrogénée, celle-ci est avantageusement comprise entre 3000 et 4500, mieux encore entre 3500 et 4500 daltons.

La dextrine hydrogénée présente en outre une teneur en DP1 et DP2 non hydrogénés avantageusement inférieure à 0,5% (DP = degré de polymérisation).

On entend par dextrines hydrogénées les produits obtenus par chauffage de l'amidon à faible taux d'humidité, en présence de catalyseurs acides ou basiques, puis hydrogénés, remplissant la condition de poids moléculaire mentionnée ci-dessus. Selon un mode de réalisation avantageux de la présente invention, ces dextrines présentent une très faible teneur en DP1 et DP2, cette propriété étant obtenue par purification chromatographique, filtration sur membranes, nanofiltration, ou toute autre technique de purification que l'homme du métier pourra aisément sélectionner parmi les pratiques connues en la matière.

Le maltitol peut être introduit dans la composition selon l'invention de préférence sous forme de maltitol cristallisé, mais il peut également être ajouté sous forme de sirop de polyols riche en maltitol, et notamment comprenant plus de 50% en poids de maltitol.

En ce qui concerne la teneur en eau de ladite composition, celle-ci est avantageusement comprise entre 2 et 10%, et plus particulièrement entre 5 et 9%.

En effet, la composition selon la présente invention présente la caractéristique d'être sous forme de poudre, de manière à assurer une stabilité supérieure à une formulation sous forme de sirop.

La présente invention vise également un procédé de fabrication de la susdite composition édulcorante, caractérisé en ce qu'il comprend au moins une étape de :
- mélange d'un polyol peu soluble ayant une solubilité dans l'eau inférieure à 60 g/100 g de solution à 20°C, d'une dextrine hydrogénée de masse moléculaire en poids comprise entre 3000 et 5000 daltons et de maltitol,
- séchage dudit mélange selon une technique choisie dans le groupe constitué par l'atomisation, l'extrusion, la granulation.

La composition édulcorante selon la présente invention est également définie comme étant une composition édulcorante susceptible d'être obtenue par le procédé conforme à l'invention.

De préférence, le polyol peu soluble dans l'eau est le mannitol.

La composition selon l'invention comprend avantageusement en poids sur sec de 27 à 35% de mannitol, de 55 à 70% de dextrine hydrogénée et de 0,5 à 10% de maltitol.

Selon une variante préférée, la dite composition comprend de 30 à 33% de mannitol, de 59 à 64% de dextrine hydrogénée et 6 à 7,5% de maltitol, ces pourcentages étant exprimés sur matière sèche.

En ce qui concerne la masse moléculaire en poids de la dextrine hydrogénée, celle-ci est avantageusement comprise entre 3000 et 4500, mieux encore entre 3500 et 4500 daltons.

Les étapes de séchage du mélange mannitol/dextrine/maltitol sont des techniques connues de l'homme du métier.

En ce qui concerne la granulation, on opérera de préférence selon les enseignements de la demande de brevet EP 1.674.475 dont la Demanderesse est titulaire. Ladite granulation comprend le mélange continu d'un sirop comprenant le mannitol, la dextrine hydrogénée et le maltitol et une dispersion simultanée d'une amorce solide dans un récipient rotatif ouvert. Le rapport pondéral amorce/sirop est avantageusement de l'ordre de 4 parties de germes pour 1 partie de sirop. Les germes sont obtenus soit par recyclage continu d'une fraction de matériau solidifié produit, soit par reconstitution d'une composition similaire en poudre. La matière sèche du sirop est ajustée en fonction de sa viscosité par l'homme du métier de manière à faciliter sa mise en oeuvre. A titre indicatif, l'on pourra se placer à une matière sèche de préférence comprise entre 75 et 80%, par exemple de 78/79% pour une meilleure faisabilité du procédé.

La température du granulateur est maintenue à environ 90°C.

Après cette étape, les granulés sont maturés dans un dispositif approprié, de préférence rotatif, à une température comprise entre 70 et 80°C et pendant 30 à 50 minutes. On pourra par exemple utiliser un tambour rotatif incliné.

A l'issue de la granulation, la composition maturée obtenue comprend environ 2 à 10% et de préférence 5 à 9% d'humidité résiduelle.

En ce qui concerne l'extrusion, on utilisera une installation comportant au moins une filière d'extrusion, les paramètres de température étant sélectionnés aisément par l'homme du métier en fonction de la teneur en eau de la composition avant séchage. La composition extrudée est ensuite successivement soumise à un refroidissement, à un broyage, et éventuellement un tamisage.

La composition selon l'invention peut également être facilement préparée à l'aide d'un granulateur de type GLATT, par atomisation, ou par tout autre moyen de séchage connu de l'homme du métier et dans des conditions adaptées à l'équipement choisi, susceptible de permettre l'obtention d'une composition selon l'invention.

Suivant un autre aspect de la présente invention, l'utilisation de la composition édulcorante conforme à l'invention ne se limite pas à la fabrication de sucres cuits sans sucre pour laquelle elle a été particulièrement mise au point, mais peut s'étendre à une utilisation dans d'autres types de confiseries que les sucres cuits, à d'autres produits alimentaires ou pharmaceutiques, à titre de charge édulcorante.

Il est possible d'y adjoindre tous types d'additifs tels que des colorants, arômes, principes actifs, pour autant qu'ils ne nuisent pas à ses propriétés remarquables.

L'invention sera mieux comprise à la lecture des exemples qui suivent qui illustrent, sans être limitatifs, différents modes de réalisation de l'invention ainsi que les avantages qu'elle procure.

### Exemple 1 : préparation d'une composition selon l'invention

On prépare un sirop comprenant sur sec 30% de mannitol, 6% de maltitol et 64 % d'une dextrine hydrogénée de masse moléculaire en poids de 4200 daltons environ, ladite dextrine étant purifiée au préalable avant hydrogénation des petites molécules saccharidiques de DP1 et DP2 par séparation sur membrane.

Ce sirop est amené à une matière sèche de 79%, puis placé dans un réservoir de stockage thermostaté, à partir duquel il est continuellement prélevé par pompage pour assurer sa dispersion au moyen d'une buse dans le granulateur.

Simultanément, on introduit des germes de cristallisation dans le granulateur, pour réaliser un rapport pondéral de germes/sirop d'environ 4 parties de germes pour 1 partie de sirop. Les germes sont obtenus par le recyclage continu d'une fraction du matériau solidifié préalablement produit.

La température du granulateur est maintenue à 90°C environ.

Les granulés obtenus après cette étape sont maturés par l'achèvement de la cristallisation dans un dispositif de maturation pendant environ 1 heure. Les granulés maturés obtenus sont soumis ensuite à un séchage en utilisant de l'air à 75°C pendant 30 à 50 minutes. Après séchage, les granulés maturés apparaissent sous forme de poudre contenant 6 à 9% d'humidité résiduelle.

### Exemple 2 préparation de sucres cuits

La composition obtenue à l'exemple 1 est utilisée pour préparer des sucres cuits, en comparaison avec de l'isomalt.

Les conditions de préparation des sucres cuits sont les suivantes :
- préparation d'un sirop à 75% de matière sèche
- cuisson du sirop à 165°C (180°C pour l'isomalt)
- addition d'acide citrique, de colorant et d'arôme
- mise en forme des sucres cuits, refroidissement

La stabilité des sucres cuits est évaluée en les plaçant dans des boites carton, sous humidité relative de 70% et à 30°C d'une part, et à 75% d'humidité relative, 40°C d'autre part, et ce pendant dix jours.

Pendant ce test, la reprise en eau des bonbons est évaluée par pesée, et leur caractère collant est estimé en agitant la boite carton.
0: non collant -
0+: légèrement collant, pouvant être facilement décollés par agitation
+: collant : les bonbons sont difficiles à détacher les uns des autres
++: très collant, les bonbons ne peuvent être détachés les uns des autres

| **70 % HR - 30°C** | **isomalt HBC** | **Composition selon l'invention** |
|---|---|---|
| Après 1 jour | 0+ | 0 |
| Après 2 jours | + | 0 |
| Après 3 jours | ++ | 0 |
| Après 4 jours | ++ | 0 |
| Après 7 jours | ++ | 0 |
| Après 8 jours | ++ | 0 |
| Après 9 jours | ++ | 0 |
| Après 11 jours | ++ | 0 |

| **75 % HR - 40°C** | **isomalt HBC** | **mannitol + dextrin HBC** |
|---|---|---|
| Après 1 jour | 0+ | 0 |
| Après 2 jours | + | 0 |
| Après 3 jours | ++ | 0 |
| Après 4 jours | ++ | 0 |
| Après 7 jours | ++ | 0 |
| Après 8 jours | ++ | 0 |
| Après 9 jours | ++ | 0+ |
| Après 11 jours | ++ | 0 |

Ces résultats montrent qu'aucun problème de collage ou de déformation n'a été observé pour les sucres cuits préparés avec une composition selon l'invention. Après deux semaines de stockage, les bonbons ne présentent aucune craquelure en surface.

Une composition selon l'exemple 1, mais ne contenant pas de maltitol est testée dans les mêmes conditions que la composition selon l'invention pour préparer des sucres cuits : les sucres cuits ainsi préparés présentent rapidement des fissures en surface, qui démontrent bien le rôle du maltitol dans la suppression des craquelures des sucres cuits, conformément à l'invention.

### Exemple 3 : exemple comparatif

Des sucres cuits sont préparés avec une composition selon l'invention dans laquelle on a enlevé ou remplacé le maltitol par du sorbitol, de manière à évaluer l'effet sur la réduction des craquelures.

Différentes compositions sont préparées comprenant de 0 à 5% de sorbitol, et sans maltitol.

| | **% mannitol** | **% dextrine*** | **% sorbitol** | **t°C cuisson** |
|---|---|---|---|---|
| A | 35 | 65 | 0 | 130 |
| B | 35 | 65 | 0 | 150 |
| C | 35 | 65 | 0 | 180 |
| D | 34,5 | 64,5 | 1 | 130 |
| E | 34,5 | 64,5 | 1 | 150 |
| F | 34,5 | 64,5 | 1 | 180 |
| G | 32,5 | 62,5 | 5 | 180 |

| | | | | |
|---|---|---|---|---|
| * dextrine hydrogénée de poids moléculaire 4900 daltons en poids | | | | |

Les sucres cuits fabriqués sont ensuite placés pendant dix jours à 75% d'humidité relative et 40°C, à la suite de quoi on observe leur aspect à l'oeil nu, et leur collage.

### Suivi des fissures

J0: aucune fissure sur les échantillons

| | 75 % HR - 40°C |
|---|---|
| A | **+** |
| B | **++** |
| C | **+++** |
| D | **0+** |
| E | **+** |
| F | **++** |
| G | **0+** |

### Suivi du collage

| | 75 % HR - 40°C |
|---|---|
| A | **0** |
| B | **0+** |
| C | **0+** |
| D | **+** |
| E | **+** |
| F | **0+** |
| G | **++** |

On conclut suite à ces observations que le sorbitol n'a que peu d'effet sur la réduction des craquelures et que de plus quelques problèmes de collage sont rencontrés après dix jours de test, alors qu'avec le maltitol on parvient à faire disparaître totalement les craquelures sans générer de phénomènes de collage.

## Revendications

1. Composition édulcorante granulée **caractérisée par le fait qu'**elle comprend :
- un polyol peu soluble ayant une solubilité dans l'eau inférieure à 60 g/100 g de solution à 20°C,
- une dextrine hydrogénée de masse moléculaire en poids comprise entre 3000 et 5000 daltons,
- du maltitol.

2. Composition selon la revendication 1, **caractérisée en ce que** le polyol peu soluble est le mannitol.

3. Composition selon l'une ou l'autre des revendications 1 et 2, **caractérisée en ce qu'**elle comprend de 27 à 35% de mannitol, de 55 à 70% de dextrine hydrogénée et 0,5 à 10% de maltitol.

4. Composition selon l'une quelconque des revendications 1 à 3, **caractérisée en ce que** la masse moléculaire en poids de la dextrine hydrogénée est comprise entre 3000 et 4500.

5. Composition selon l'une quelconque des revendications 1 à 4, **caractérisée en ce que** la dextrine hydrogénée présente une teneur en DP1 et DP2 non hydrogénés inférieure à 0,5%.

6. Composition selon l'une quelconque des revendications 1 à 5, **caractérisée en ce qu'**elle présente une teneur en eau comprise entre 2 et 10%.

7. Procédé de préparation d'une composition édulcorante granulée, **caractérisé en ce qu'**il comprend au moins une étape de :
- mélange d'un polyol peu soluble ayant une solubilité dans l'eau inférieure, à 60 g/100 g de solution à 20°C, d'une dextrine hydrogénée de masse moléculaire en poids comprise entre 3000 et 5000 daltons et de maltitol,
- séchage dudit mélange selon une technique choisie dans le groupe constitué par l'atomisation, l'extrusion, la granulation.

8. Procédé selon la revendication 7, **caractérisé en ce que** ledit mélange comprend en poids sur sec de 27 à 35% de mannitol, de 55 à 70% de dextrine hydrogénée et 0,5 à 10% de maltitol.

9. Procédé selon l'une ou l'autre des revendications 7 et 8, **caractérisé en ce que** ladite dextrine hydrogénée présente une teneur en DP1 et DP2 non hydrogénés inférieure à 0,5%.

## Claims

1. Granulated sweetening composition, **characterized in that** it comprises:
- a poorly soluble polyol with a water solubility of less than 60 g/100 g of solution at 20°C,
- a hydrogenated dextrin with a molecular weight between 3000 and 5000 daltons,
- maltitol.

2. Composition according to Claim 1, **characterized in that** the poorly soluble polyol is mannitol.

3. Composition according to either of Claims 1 and 2, **characterized in that** it comprises from 27% to 35% mannitol, from 55% to 70% hydrogenated dextrin and from 0.5 to 10% maltitol.

4. Composition according to any one of Claims 1 to 3, **characterized in that** the molecular weight of the hydrogenated dextrin is between 3000 and 4500.

5. Composition according to any one of Claims 1 to 4, **characterized in that** the hydrogenated dextrin has a non-hydrogenated DP1 and DP2 content of less than 0.5%.

6. Composition according to any one of Claims 1 to 5, **characterized in that** it has a water content of between 2% and 10%.

7. Process for preparing a granulated sweetening composition, **characterized in that** it comprises at least one step of:
- mixing a poorly soluble polyol with a water solubility of less than 60 g/100 g of solution at 20°C, a hydrogenated dextrin with a molecular weight between 3000 and 5000 daltons, and maltitol,
- drying said mixture according to a technique chosen from the group constituted by atomization, extrusion and granulation.

8. Process according to Claim 7, **characterized in that** the said mixture comprises, by weight relative to the solids, from 27% to 35% mannitol, from 55% to 70% hydrogenated dextrin and 0.5% to 10% maltitol.

9. Process according to either of Claims 7 and 8, **characterized in that** the said hydrogenated dextrin has a non-hydrogenated DP1 and DP2 content of less than 0.5%.

## Patentansprüche

1. Süßstoffgranulatzusammensetzung **dadurch gekennzeichnet, dass** sie umfasst:
- ein wenig lösliches Polyol, das eine Löslichkeit in Wasser von weniger als 60 g/100 g Lösung bei 20°C hat,
- ein hydriertes Dextrin mit einer Molekülmasse zwischen 3000 und 5000 Dalton an Gewicht,
- Maltitol.

2. Zusammensetzung nach Anspruch 1, **dadurch gekennzeichnet, dass** das wenig lösliche Polyol Mannitol ist.

3. Zusammensetzung nach einem der Ansprüche 1 oder 2, **dadurch gekennzeichnet, dass** sie von 27 bis 35% Mannitol, von 55 bis 70% hydriertes Dextrin und 0,5 bis 10% Maltitol umfasst.

4. Zusammensetzung nach einem der Ansprüche 1 bis 3, **dadurch gekennzeichnet, dass** die Molekülmasse des hydrierten Dextrins zwischen 3000 und 4500 an Gewicht ist.

5. Zusammensetzung nach einem der Ansprüche 1 bis 4, **dadurch gekennzeichnet, dass** das hydrierte Dextrin einen Gehalt an nicht-hydriertem DP1 und DP2 von weniger als 0,5% aufweist.

6. Zusammensetzung nach einem der Ansprüche 1 bis 5, **dadurch gekennzeichnet, dass** sie einen Wassergehalt zwischen 2 und 10% aufweist.

7. Verfahren zur Herstellung einer Süßstoffgranulatzusammensetzung, **dadurch gekennzeichnet, dass** es mindestens einen Schritt von:
• Mischen eines wenig löslichen Polyols, das eine Löslichkeit in Wasser von weniger als 60 g/100 g Lösung bei 20°C hat, eines hydrierten Dextrins mit einer Molekülmasse zwischen 3000 und 5000 Dalton an Gewicht und Maltitol,
• Trocknen der Mischung durch eine Technik, die aus der Gruppe bestehend aus Zerstäubung, Extrusion, Granulation ausgewählt ist, umfasst.

8. Verfahren nach Anspruch 7, **dadurch gekennzeichnet, dass** die Mischung ein Trockengewicht von 27 bis 35% Mannitol, von 55 bis 70% hydriertes Dextrin und 0,5 bis 10% Maltitol umfasst.

9. Verfahren nach einem der Ansprüche 7 oder 8, **dadurch gekennzeichnet, dass** das hydrierte Dextrin einen Gehalt an nicht-hydriertem DP1 und DP2 von weniger als 0,5% aufweist.
